Europäisches Patentamt

European Patent Office

Office européen des brevets

(19)

(11) Veröffentlichungsnummer : **0 335 210 B1**

# (12) EUROPÄISCHE PATENTSCHRIFT

(45) Veröffentlichungstag der Patentschrift :
**03.06.92 Patentblatt 92/23**

(51) Int. Cl.$^5$ : **C08J 11/06**, C02F 1/56,
B05D 1/02, // C08L23/08

(21) Anmeldenummer : **89104883.7**

(22) Anmeldetag : **18.03.89**

(54) Verfahren zur Koagulation von Lacken und anderen organischen Beschichtungen.

(30) Priorität : **25.03.88 DE 3810166**

(43) Veröffentlichungstag der Anmeldung :
**04.10.89 Patentblatt 89/40**

(45) Bekanntmachung des Hinweises auf die
Patenterteilung :
**03.06.92 Patentblatt 92/23**

(84) Benannte Vertragsstaaten :
**BE DE ES FR GB IT NL SE**

(56) Entgegenhaltungen :
**EP-A- 0 163 108
EP-A- 0 280 440
DE-A- 1 017 957
DE-A- 3 512 564**

(73) Patentinhaber : **Henkel
Kommanditgesellschaft auf Aktien
Postfach 1100 Henkelstrasse 67
W-4000 Düsseldorf 1 (DE)**

(72) Erfinder : **Geke, Jürgen, Dr.
Stoffeler Damm 108
W-4000 Düsseldorf 1 (DE)**
Erfinder : **Margeit, Ragnar
Uhlandstrasse 14
W-4100 Duisburg 14 (DE)**

EP 0 335 210 B1

## Beschreibung

Die Erfindung betrifft die Verwendung eines wäßrigen Konzentrates, enthaltend ein Ethylen-acrylsäure-copolymerisat zur Koagulation von Lacken und anderen organischen Beschichtungsmitteln.

Die Erfindung betrifft ferner ein Verfahren zur Koagulation von Lacken und anderen organischen Beschichtungsmitteln, wobei man dem Umlaufwasser in Naßabscheidern von Spritzlackieranlagen ein solches wäßriges Konzentrat zufügt.

Bei der Aufbringung von Lacken, Wachsen oder ähnlichen, nicht wasserlösliche organische Substanzen enthaltenden Beschichtungsmaterialien, z.B. in der Automobilindustrie, gelingt es nicht, die Materialien restlos auf die zu beschichtenden Teile aufzubringen. Speziell bei der Lackierung von Kraftfahrzeugen fällt in den Lackspritzkabinen sogenannter "Overspray" an, der mittels Wasser aus den Lackspritzkabinen entfernt und in ein sogenanntes Beruhigungsbecken gespült wird. Um einerseits die Funktion der wasserführenden Leitungs-, Düsen- und Berieselungssysteme durch z.B. klebende Lackpartikel nicht zu stören und andererseits das umlaufende Wasser von den aufgenommenen Inhaltsstoffen zu entsorgen, müssen zur Koagulierung der genannten Stoffe dem Umlaufwasser Chemikalien zugegeben werden.

Dabei sollte die Entklebung der verspritzten und vom Wasser aufgenommenen Lackpartikel und deren Agglomeration zu einem austragungsfähigen Koagulat in einem Arbeitsgang erfolgen.

Je nach den technisch vorhandenen Anlagen wird entweder ein Lackkoagulierungsmittel verwendet, durch das das Lackkoagulat im Beruhigungsbecken flotiert, d.h. aufschwimmt, was ein Abschöpfen des Koagulats von der Wasseroberfläche ermöglicht, oder eines, durch das das Koagulat sedimentiert, wonach es mittels eines Kratzbandes vom Beckenboden abgeräumt wird.

Zur Koagulierung herkömmlicher, vor allem in der Automobilindustrie verwendeter Lacke stehen eine Reihe neutraler und alkalischer Produkte zur Verfügung. Um Koagulierung, d.h. Entklebung der Lackpartikel und deren Agglomeration zu einem austragungsfähigen Koagulat, zu erreichen, wurden dem umlaufenden Wasser bisher alkalische pulverförmige und alkalische flüssige Produkte sowie pulverförmige neutrale Produkte zugesetzt.

So werden in der GB-B- 1 512 022 flockulierende, d.h. den Zusammenschluß von Teilchen unter Einwirkung intermolekular brückenbildender Makromoleküle bewirkende Agentien beschrieben. Diese setzen sich zusammen aus als Klärmittel wirkenden anorganischen Metallsalzen wie Eisen(II)chlorid oder Aluminiumsulfat, und organischen kationischen Polymeren wie Polyvinylpyridin oder Polyaminen in wäßriger Lösung.

Zusatzmittel zu Spülflüssigkeiten zur Koagulierung von Lack- und Grundiermitteln werden in der DE-A- 15 17 409 offenbart. Sie enthalten wasserlösliche Alkali- und/ oder Erdalkalimetallsalze, schwer wasserlösliche Hydroxide mehrwertiger Metalle, wie Magnesium, Eisen, Aluminium oder Chrom, sowie aliphatische oder cycloaliphatische Amine. Lackentklebungs- und Sedimentationsmittel, die aliphatische Carbonsäuren mit 12 oder mehr C-Atomen oder deren Alkali-, Ammonium- oder Alkanolaminsalze sowie schaumdämpfend wirkende Stoffe enthalten, werden in der DE-B- 23 47 068 beschrieben. Wäßrige Lösungen zur Entaktivierung von Overspray, die Alkalien und organische Amine bzw. Alkanolamine mit Organylgruppen mit 2 bis 10 C-Atomen enthalten, werden in der DE-A- 20 06 008 beschrieben. Alkanolamine, die zusammen mit Metallsalzen und Polyetherpolyaminen in wäßriger Lösung zur Entklebung von Lackspray-Partikelchen und zur Reinigung der Umlaufwässer in Lackspritzkabinen enthalten sind, werden auch in der US-PS 39 90 986 offenbart.

Aus der DE-A- 34 12 763 sind Koagulierungsmittel für Lacke und organische Beschichtungsmittel, insbesondere für Zweikomponenten-Polyurethanlacke, bekannt, die eine Mischung aus Cyanamid, Dicyandiamid und/oder Calciumcyanamid in Verbindung mit Polyethyleniminen und weiteren Koagulationshilfsstoffen enthalten.

Die bekannten neutralen und alkalischen Koagulierungsmittel weisen Nachteile auch bei deren Verwendung zur Koagulation herkömmlicher Lacke auf: Sie benötigen eine relativ lange Zeit, um die Lackpartikelchen zu koagulieren und das zur Austragung überschüssiger Lacknebel verwendete Umlaufwasser vollständig zu entsorgen. In ungünstigen Fällen führt dies zur Ablagerung miteinander verklebender Lackteilchen in Rohrleitungssystemen direkt nach der Lackierkabine. Außerdem enthalten die meisten bekannten Koagulationsmittel Substanzen, z.B. anorganische Anionen (Chlorid, Sulfat), die sich im Umlaufwasser anreichern und korrosiv gegenüber verschiedenen Anlagenteilen wirken. Da aus wassertechnischen Gründen eine Verlängerung der Standzeit der Entsorgungsbäder angestrebt wird, ist eine Verwendung sich schnell anreichernder, die Funktionsfähigkeit der Anlage aus verschiedenen Gründen beeinträchtigender Substanzen unerwünscht, da sie zu einem häufigen Badwechsel zwingt.

Diesen Nachteilen versucht die vorliegende Erfindung abzuhelfen, deren Aufgabe es ist, durch die Verwendung eines wäßrigen Konzentrates, enthaltend ein Ethylen-acrylsäure-copolymerisat, die problemlose Koagulierung von Lacken und anderen organischen Beschichtungsmitteln zu gewährleisten.

Derartige Ethylen-acrylsäure-copolymerisate sind an sich bekannt. So wird in der EP 0 201 702 A2 ein

2

flüssiges Konservierungsmittel für Metall- und Lackoberflächen beschrieben, welches auf einer wäßrigen Dispersion eines Ethylen-acrylsäure-copolymerisats, bestehend aus 8 bis 25 Gew.-% Acrylsäure- und 92 bis 75 Gew.-% Ethyleneinheiten, bezogen auf die Säureform des Copolymerisats, basiert. Hierbei sind die Carboxylgruppen des Ethylen-acrylsäure-copolymerisats zu 50 bis 100 Mol-% neutralisiert. Derartige wäßrige Dispersionen dienen zum temporären
Konservieren von Metall- und Lackoberflächen.

Demgegenüber betrifft die vorliegende Erfindung ein Verfahren zur Koagulation von Lacken und anderen organischen Beschichtungsmitteln, dadurch gekennzeichnet, daß ein wäßriges Konzentrat, enthaltend 2 bis 25 Gew.-% eines Ethylen-acrylsäure-copolymerisats, das 8 bis 25 Gew.-% Acrylsäureeinheiten und 92 bis 75 Gew.-% Ethyleneinheiten, bezogen auf die Säureform des Copolymerisats, aufweist und als Salz einer anorganischen oder organischen Base vorliegt, verwendet wird.

Die erfindungsgemäß zu verwendenden wäßrigen Konzentrate sind im Gegensatz zu den aus dem Stand der Technik bekannten pulverförmigen Materialien oder flüssigen Dispersionen bzw. Aufschwemmungen klare Flüssigkeiten auf wäßriger Basis, ohne den Zusatz von üblichen organischen Lösungsmitteln. Darüberhinaus sind die erfindungsgemäß zu verwendenden wäßrigen Konzentrate auch zur Koagulation von normalerweise problematischen Lacken geeignet. Ferner können die mit Hilfe der erfindungsgemäß verwendeten wäßrigen Konzentrate erhaltenen überschüssigen Lackkoagulate leicht flotiert werden, und schließlich besitzen derartige Lackkoagulate eine sehr günstige Konsistenz bezüglich der Abtrennung aus den Umlaufwässern.

Wie bereits vorstehend gesagt, enthalten die im Sinne der vorliegenden Erfindung zu verwendenden Ethylen-acrylsäure-copolymerisate 8 bis 25 Gew.-% Acrylsäureeinheiten und 92 bis 75 Gew.-% Ethyleneinheiten, bezogen auf die Säureform des Copolymerisats. Bevorzugt werden solche Copolymerisate verwendet, die 12 bis 22 Gew.-% Acrylsäureeinheiten und 88 bis 78 Gew.-% Ethyleneinheiten, bezogen auf die Säureform des Copolymerisats, aufweisen. Diese Copolymerisate liegen als Salz einer anorganischen oder organischen Base in den erfindungsgemäß zu verwendenden wäßrigen Konzentraten vor, vorzugsweise in Form von Alkalimetall-, Ammonium-, Amin- oder Alkanolaminsalzen. Geeignete anorganische oder organische Basen zur Gewinnung dieser Salze sind beispielsweise Natriumhydroxid und Kaliumhydroxid, Ammoniak und/oder Amine, z.B. Isophorondiamin, oder Alkanolamine, wie Monoethanolamin, Diethanolamin, Triethanolamin, Isopropanolamin oder Dimethylethanolamin.

Die erfindungsgemäß zu verwendenden wäßrigen Konzentrate enthalten 2 bis 25 Gew.-%, vorzugsweise 5 bis 20 Gew.-% dieser Ethylen-acrylsäure-copolymerisate. Die Herstellung solcher Copolymerisate ist beispielsweise in der bereits vorstehend zitierten EP 0 201 702 A2 beschrieben. Sie kann in an sich bekannter Weise durch kontinuierliche Hochdruckpolymerisation von Ethylen mit Acrylsäure in Gegenwart von radikalbildenden Initiatoren erfolgen. Entsprechende Ethylen-acrylsäure-copolymerisate sind handelsüblich, sie werden beispielsweise von der Firma BASF, Ludwigshafen, unter der Typenbezeichnung Poligen[R] angeboten.

Die erfindungsgemäß zu verwendenden wäßrigen Konzentrate enthalten vorzugsweise zusätzlich 0,5 bis 4 Gew.-% Cyanamid und/oder Dicyandiamid und/oder Cyanamid-Salze, bezogen auf die Gesamtzusammensetzung des Konzentrates. Insbesondere beträgt der Gehalt der wäßrigen Konzentrate an solchen Cyanamid-Derivaten 2 bis 3 Gew.-%. Als Cyanamid-Salz im Sinne der vorliegenden Erfindung dient insbesondere Calciumcyanamid. Die Verwendung derartiger Cyanamid-Derivate in Lackkoagulierungsmitteln ist aus der DE-OS 34 12 763 an sich bekannt. Im Falle der vorliegenden Erfindung wird durch die zusätzliche Verwendung derartiger Cyanamidderivate die an sich sehr gute lackkoagulierende Wirkung der erfindungsgemäß zu verwendenden Ethylen-acrylsäure-copolymerisate noch verbessert.

Die erfindungsgemäß zu verwendenden wäßrigen Konzentrate können ferner zusätzlich 0,5 bis 20 Gew.-% an sich übliche Koagulierungswirkstoffe und/oder -hilfsstoffe, bezogen auf die Gesamtzusammensetzung des Konzentrates, enthalten.

Zusätzliche Koagulierungswirkstoffe im Sinne der vorliegenden Erfindung sind z.B. wasserlösliche anorganische Salze, vorzugsweise Natriumhydrogencarbonat und/oder Magnesiumnitrat, Alkalimetallhydroxide, wie Natrium- oder Kaliumhydroxid, sowie ferner Amine und/oder Alkanolamine, beispielsweise Monoethanolamin, Triethanolamin oder Isopropanolamin.

Zusätzliche Koagulationshilfsstoffe im Sinne der vorliegenden Erfindung sind z.B. Biozide und/oder pH-Wert regelnde Stoffe und/oder Korrosionsinhibitoren und/oder Antischaummittel und/oder Solubilisierungsmittel. Als Biozide sind beispielsweise Formaldehyd, Isothiazoline und deren Derivate sowie Pyridin-N-oxid und dessen Derivate geeignet. pH-Wert-Regler sind beispielsweise nicht korrosive anorganische oder organische Säuren, wie Phosphorsäure oder Benzoesäure sowie deren saure Salze, ferner die vorstehend genannten Alkalimetallhydroxide und/oder aminische Komponente wie Mono- oder Triethanolamin. Geeignete Korrosionsinhibitoren werden beispielsweise aus der Gruppe der Alkanolamine und wasserlöslichen Phosphonatsalze, beispielsweise 1-Hydroxyethan-1,1-diphosphonsäure-Natriumsalz, ausgewählt. Als Antischaummittel hat sich neben den für diese Zwecke aus dem Stand der Technik bekannten Mitteln insbesondere das Produkt Dehydran[R] F der Firma Henkel, Düsseldorf, bewährt, welches auf einer Kombination von Metallseifen in Mineralöl basiert. Geeignete Solubilisierungsmittel sind gleichfalls aus dem Stand der Technik hinreichend bekannt, genannt sei hier beispielsweise Natrium-cumolsulfonat.

Die Herstellung der erfindungsgemäß zu verwendenen Konzentrate erfolgt durch Vermischen der einzelnen, vorstehend erörterten Komponenten mit Wasser. Im Sinne der vorliegenden Erfindung ist es bevorzugt, daß der pH-Wert dieser wäßrigen Konzentrate so eingestellt wird, daß nach Verdünnen des Konzentrates mit Wasser auf eine Konzentration von 1 % der pH-Wert im Bereich von 7,5 bis 10, vorzugsweise im Bereich von 8 bis 9, liegt.

Die erfindungsgemäß zu verwendenden wäßrigen Konzentrate sind geeignet zur Koagulation aller üblichen Lacktypen und organischen Beschichtungsmittel wie Wachsen und Unterbodenschutz. In allen Fällen tritt eine sehr rasche Koagulationswirkung ein, d.h. die im Umlaufwasser mitgeführten Lackpartikel werden sehr schnell entklebt, ohne daß sie an den anlagentechnischen Einrichtungen anhaften. Die gebildeten Koagulatpartikel flotieren überwiegend und werden durch die Strömung des Umlaufwassers rasch weitertransportiert, ohne die Leitungen zu verstopfen.

Dementsprechend betrifft die vorliegende Erfindung weiterhin ein Verfahren zur Koagulation von Lacken und anderen organischen Beschichtungsmitteln, wobei man dem Umlaufwasser in Naßabscheidern von Spritzlackieranlagen ein wäßriges Konzentrat, wie es vorstehend beschrieben ist, zufügt. Die wäßrigen Konzentrate können dann am Einsatzort entweder direkt oder nach Verdünnen mit Wasser auf eine gewünschte Konzentration dem Umlaufwasser in Naßabscheidern von Spritzlackieranlagen zugesetzt werden. Die Zugabe erfolgt zweckmäßigerweise an einer Stelle mit kräftiger Turbulenz des Umlaufwassers bei laufender Pumpe, um eine schnelle Verteilung zu gewährleisten.

Die Dosierung der erfindungsgemäß zu verwendenden wäßrigen Konzentrate erfolgt entweder kontinuierlich mittels geeigneter Dosiergeräte oder diskontinuierlich. Bevorzugt setzt man im Sinne des erfindungsgemäßen Verfahrens das wäßrige Konzentrat dem Umlaufwasser in Mengen von 10 bis 100 ml pro Kubikmeter und Stunde Betriebszeit, vorzugsweise in Mengen von 30 bis 50 ml pro Kubikmeter und Stunde Betriebszeit, zu.

Die Erfindung wird durch die nachstehenden Beispiele näher erläutert. In diesen Beispielen werden zunächst Formulierungen wäßriger Konzentrate für die erfindungsgemäß Verwendung angegeben.

Beispiel 1

| | |
|---|---|
| 50 Gew.-% | Ethylenacrylsäurecopolymerisat-Dimethyl - ethanolaminsalz in Form einer 26 Gew.-%igen wäßrigen Emulsion (Poligen[R] WE4, Firma BASF, Ludwigshafen) |
| Rest Wasser | |

Beispiel 2

| | |
|---|---|
| 45 Gew.-% | Ethylenacrylsäurecopolymerisat-Dimethyl - ethanolaminsalz in Form einer 26 Gew.-%igen wäßrigen Emulsion (Poligen[R] WE4) |
| 2 Gew.-% | Dicyandiamid |
| Rest Wasser | |

Beispiel 3

| | |
|---|---|
| 30 Gew.-% | Ethylenacrylsäurecopolymerisat-Dimethyl - ethanolaminsalz in Form einer 26 Gew.-%igen wäßrigen Emulsion (Poligen[R] WE4) |
| 3 Gew.-% | Dicyandiamid |
| 8 Gew.-% | Triethanolamin |
| 3 Gew.-% | 1-Hydroxyethan-1,1-diphosphonsäure |
| Rest Wasser | |

Beispiel 4

| | |
|---|---|
| 40 Gew.-% | Ethylenacrylsäurecopolymerisat-Natriumsalz in Form einer 26 Gew.-%igen wäßrigen Emulsion (Poligen[R] WE2, Firma BASF) |
| 2 Gew.-% | Dicyandiamid |

| | |
|---|---|
| 5 Gew.-% | Benzoesäure |
| 10 Gew.-% | Isopropanolamin |
| Rest Wasser | |

## Beispiel 5

Die Koagulierungs-Wirksamkeit der Formulierungen gemäß den vorstehenden Beispielen 1 bis 4 wurde an den folgenden Lacken überprüft:

A) Einkomponenten-High-Solid-Decklack der Firma Herberts (Einbrenn- und Decklack mellanröd 173-2)

B) Einkomponenten-Polyurethansteinschlagschutzgrund-Füllerlack der Firma Bollig & Kemper (Heliotherm Steinschlag-Zwischengrund, grau, 05-166-7663)

Die Versuche wurden in einer Technikum-Spritzlackieranlage durchgeführt, die einen Wasserinhalt von 1 $m^3$ aufwies.

Dem Umlaufwasser wurden bei laufender Pumpe jeweils 1 g/l der wäßrigen Konzentrate zugegeben. Anschließend wurden mit einer Lackspritzpistole jeweils 0,05 Gew.-%, bezogen auf das Umlaufwasser, der obengenannten, spritzfähigen Lacke gleichmäßig auf das Wasser aufgesprüht. Der Koagulationseffekt war praktisch bereits nach einigen Minuten zu beobachten: Der Lack koagulierte jeweils in feindisperser, nicht-klebender Form. Die gebildeten Lack-Koagulate flotierten überwiegend und ließen sich problemlos vom Umlaufwasser abtrennen.

## Beispiel 6

Die Koagulierungs-Wirksamkeit der Formulierung gemäß Beispiel 2 wurde ferner mit derjenigen eines handelsüblichen Koagulierungsmittels - P3R-croni, Henkel, Düsseldorf - auf Basis anorganischer Salze (Soda, Phosphate) verglichen.

Zur Bewertung der Ergebnisse dienten die Kriterien der folgenden Bewertungsskala:

## Bewertungsskale für die Lackkoagulierung:

Koagulierung des Lackes:

K1 = entklebt
K2 = austragsfähig (Oberfläche entklebt, innen noch klebrig)
K3 = nicht entklebt

Aussehen des Lackkoagulats:

A1 = feindispers
A2 = mitteldispers
A3 = grobdispers
A4 = Klumpen

Die Versuche erfolgten in der gleichen Weise, wie im vorstehenden Beispiel beschrieben; es resultierten die folgenden Ergebnisse:

| Lack | Koagulierungsmittel | Koagulierung | Aussehen |
|---|---|---|---|
| Decklack Fa. Herberts | gemäß Beispiel 2 | K1 | A2 |
| | P3$^R$-croni | K2/K3 | A4 |
| Steinschlag- Schutzgrund, Fa. Bollig & Kemper | gemäß Beispiel 2 | K1 | A2 |
| | P3$^R$-croni | K2/K3 | A2 |

**Patentansprüche**

1. Verfahren sur Koagulation von Lacken und anderen organischen Beschichtungsmitteln, dadurch gekennzeichnet, daß ein wäßriges Konzentrat, enthaltend 2 bis 25 Gew.-% eines Ethylen-acrylsäure-copolymerisats, das 8 bis 25 Gew.-% Acrylsäureeinheiten und 92 bis 75 Gew.-% Ethyleneinheiten, bezogen auf die Säureform des Copolymerisats, aufweist und als Salz einer anorganischen oder organischen Base vorliegt, verwendet wird.

2. Verfahren nach Anspruch 1, dadurch gekennzeichnet, daß das wäßrige Konzentrat 5 bis 20 Gew.-% des Copolymerisats enthält.

3. Verfahren nach Anspruch 1 oder 2, dadurch gekennzeichnet, daß das Copolymerisat in Form von Alkalimetall-, Ammonium-, Amin-, oder Alkanolaminsalzen vorliegt.

4. Verfahren nach einem der Ansprüche 1 bis 3, dadurch gekennzeichnet, daß das wäßrige Konzentrat 0,5 bis 4 Gew.-% Cyanamid und/oder Dicyandiamid und/oder Cyanamid-Salze, bezogen auf die Gesamtzusammensetzung des Konzentrates, enthält.

5. Verfahren nach einem der Ansprüche 1 bis 4, dadurch gekennzeichnet, daß das wäßrige Konzentrat zusätzlich 0,5 bis 20 Gew.-% an sich übliche Koagulierungswirkstoffe und/oder Hilfsstoffe, bezogen auf die Gesamtzusammensetzung des Konzentrats, enthält.

6. Verfahren nach Anspruch 5, dadurch gekennzeichnet, daß das wäßrige Konzentrat als Koagulierungswirkstoffe wasserlösliche anorganische Salze und/oder Alkalimetallhydroxide und/oder Amine und/oder Alkanolamine enthält.

7. Verfahren nach Anspruch 5, dadurch gekennzeichnet, daß das wäßrige Konzentrat als Hilfsstoffe Biozide und/oder pH-Wert regelnde Stoffe und/oder Korrosionsinhibitoren und/oder Antischaummittel und/oder Solubilisierungsmittel enthält.

8. Verfahren nach einem der Ansprüche 1 bis 7, dadurch gekennzeichnet, daß der pH-Wert des wäßrigen Konzentrates so eingestellt ist, daß nach Verdünnen des Konzentrates mit Wasser auf eine Konzentration von 1 % der pH-Wert im Bereich von 7,5 bis 10, vorzugsweise von 8 bis 9, liegt.

9. Verfahren nach einem der Ansprüche 1 bis 8, dadurch gekennzeichnet, daß man das wäßrige Konzentrat dem Umlaufwasser in Naßabscheidern von Spritszlackieranlagen zufügt.

10. Verfahren nach Anspruch 9, dadurch gekennzeichnet, daß man das wäßrige Konzentrat dem Umlaufwasser in Mengen von 10 bis 100 ml pro Kubikmeter und Stunde Betriebszeit, vorzugsweise in Mengen von 30 bis 50 ml pro Kubikmeter und Stunde Betriebszeit, zufügt.

## Claims

1. A process for coagulating lacquers and other organic coating compositions, characterized in that an aqueous concentrate containing 2 to 25% by weight of an ethylene/ acrylic acid copolymer which contains 8 to 25% by weight acrylic acid units and 92 to 75% by weight ethylene units, based on the acid form of the copolymer, and which is present as the salt of an inorganic or organic base is used.

2. A process as claimed in claim 1, characterized in that the aqueous concentrate contains 5 to 20% by weight of the copolymer.

3. A process as claimed in claim 1 or 2, characterized in that the copolymer is present in the form of alkali metal, ammonium, amine or alkanolamine salts.

4. A process as claimed in any of claims 1 to 3, characterized in that the aqueous concentrate contains 0.5 to 4% by weight cyanamide and/or dicyanodiamide and/or cyanamide salts, based on the overall composition of the concentrate.

5. A process as claimed in any of claims 1 to 4, characterized in that the aqueous concentrate additionally contains 0.5 to 20% by weight typical coagulating agents and/or auxiliaries, based on the overall composition of the concentrate.

6. A process as claimed in claim 5, characterized in that the aqueous concentrate contains water-soluble inorganic salts and/or alkali metal hydroxides and/or amines and/or alkanolamines as coagulating agents.

7. A process as claimed in claim 5, characterized in that the aqueous concentrate contains biocides and/or pH regulators and/or corrosion inhibitors and/or foam inhibitors and/or solubilizing agents as auxiliaries.

8. A process as claimed in any of claims 1 to 7, characterized in that the pH value of the aqueous concentrate is adjusted so that, after dilution of the concentrate with water to a concentration of 1%, the pH value is in the range from 7.5 to 10 and preferably in the range from 8 to 9.

9. A process as claimed in any of claims 1 to 8, characterized in that the aqueous concentrate is added to the circulating water in wet separators of spray lacquering installations.

10. A process as claimed in claim 9, characterized in that the aqueous concentrate is added to the circulating water in quantities of 10 to 100 ml per cubic metre and per hour operating time and preferably in quantities of 30 to 50 ml per cubic metre and per hour operating time.

## Revendications

1. Procédé de coagulation de vernis et autres agents de recouvrement organiques, caractérisé en ce que l'on utilise un concentré aqueux renfermant de 2 à 25 % en poids d'un copolymérisat éthylène/Acide Acrylique, qui possède 8 à 25 % en poids d'unités acide acrylique et 92 à 75 % en poids d'unités d'éthylène rapportés à la forme acide du copolymérisat, et se présente sous forme de sel de base minérale ou organique.

2. Procédé selon la revendication 1, caractérisé en ce que le concentré aqueux renferme de 5 à 20 % en poids de copolymérisat.

3. Procédé selon la revendication 1 ou la revendication 2, caractérisé en ce que le copolymérisat se présente sous la forme de sels de métal alcalin, de sels d'Ammonium, de sels d'Amine, ou de sels d'alcanolalmine.

4. Procédé selon l'une des revendications 1 à 3, caractérisé en ce que le concentré aqueux renferme de 0,5 à 4 % en poids de Cyanamide, et/ou de Dicyandiamide et /ou de sels de Cyanamide, rapportés à la composition totale du concentré.

5. Procédé selon l'une des revendications 1 à 4, caractérisé en ce que le concentré aqueux renferme en supplément de 0,5 à 20 % en poids de principes actifs usuels de coagulation et/ou d'adjuvants, rapportés à la composition totale du concentré.

6. Procédé selon la revendication 5, caractérisé en ce que le concentré aqueux renferme comme principe actif de coagulation des sels hydrosolubles minéraux et/ou des hydroxydes de métal alcalin et/ou des amines et/ou des alcanolamines.

7. Procédé selon la revendication 5, caractérisé en ce que le concentré aqueux contient comme adjuvants, des biocides et/ou des substances qui régulent la valeur du pH, et/ou des inhibiteurs de corrosion et/ou des agents anti-mousse et/ou des agents de solubilisation.

8. Procédé selon l'une des revendications 1 à 7, caractérisé en ce que la valeur du pH du concentré aqueux est ajustée de façon qu'après dilution du concentré avec de l'eau jusqu'à une concentration de 1 %, la valeur du pH se situe dans la zone de 7,5 à 10, de préférence de 8 à 9.

9. Procédé selon l'une des revendications 1 à 8, caractérisé en ce que l'on ajoute à l'eau de circulation dans les séparateurs humides des installations de laquage par pulvérisation, le concentré aqueux.

10. Procédé selon la revendication 9, caractérisé en ce que l'on ajoute le concentré aqueux à l'eau de circulation en quantités allant de 10 à 100 ml par m³ et heure de fonctionnement, de préférence en quantités allant de 30 à 50 ml par m³ et par heure de fonctionnement.